Europäisches Patentamt

European Patent Office

Office européen des brevets

(19)

(11) **EP 1 382 756 B1**

(12) **EUROPÄISCHE PATENTSCHRIFT**

(45) Veröffentlichungstag und Bekanntmachung des Hinweises auf die Patenterteilung:
**12.04.2006 Patentblatt 2006/15**

(21) Anmeldenummer: **02703008.9**

(22) Anmeldetag: **04.02.2002**

(51) Int Cl.:
*E03B 3/28* (2006.01)    *B01D 5/00* (2006.01)
*F28D 15/00* (2006.01)

(86) Internationale Anmeldenummer:
**PCT/RU2002/000033**

(87) Internationale Veröffentlichungsnummer:
**WO 2002/086245 (31.10.2002 Gazette 2002/44)**

(54) **VERFAHREN ZUM EXTRAHIEREN VON WASSER AUS LUFT UND VORRICHTUNG ZUR DURCHFÜHRUNG DES VERFAHRENS**

METHOD FOR EXTRACTING WATER FROM AIR AND DEVICE FOR CARRYING OUT SAID METHOD

PROCEDE D'EXTRACTION D'EAU A PARTIR DE L'AIR ET DISPOSITIF CORRESPONDANT

(84) Benannte Vertragsstaaten:
**AT BE CH CY DE DK ES FI FR GB GR IE IT LI LU MC NL PT SE TR**

(30) Priorität: **24.04.2001 RU 2001110753**

(43) Veröffentlichungstag der Anmeldung:
**21.01.2004 Patentblatt 2004/04**

(73) Patentinhaber: **Ray Agua 2002, S.L.**
**43201 Reus (Tarragona) (ES)**

(72) Erfinder: **ROMANOVSKY, Vladimir Fedorovich**
**Moscow, 129642 (RU)**

(74) Vertreter: **Kietzmann, Manfred**
**Kietzmann, Vosseberg, Röhnicke,**
**Patentanwälte-Rechtsanwalt-Partnerschaft,**
**Friedrichstrasse 95**
**IHZ P.O. Box 4**
**10117 Berlin (DE)**

(56) Entgegenhaltungen:
**WO-A-98/12489          CH-A- 657 692**
**DE-A1- 3 313 711       FR-A- 2 672 970**
**RU-C1- 2 081 256       RU-C1- 2 094 127**
**RU-C1- 2 146 744       US-A- 2 438 120**
**US-A- 5 845 505**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Diese Erfindung bezieht sich auf das Gebiet der Gasthermodynamik, genauer - auf die Wassergewinnung aus der Außenluft, und zwar - auf das Verfahren zur Wasserextraktion aus Luft und die Einrichtung für dessen Ausführung.

Zugrundeliegender Stand der Technik

Es ist ein Verfahren zur Wasserextraktion aus Luft (RU, A, 2081256) bekannt, welches darin besteht, dass ein Luftstrom erzeugt wird, an einem Abschnitt dieses Stroms dessen künstliche Abkühlung ausgeführt wird, davor und danach die Wärmeübertragung zwischen den n Stufen des Stroms so ausgeführt wird, dass die Wärmeübertragung von der ersten Stufe zur n. Stufe, von der zweiten - zur (n-1). Stufe und weiter der Reihe nach von der Stufe n/2 zur Stufe n/2+1 erfolgt. Beim Erreichen der Temperatur des Taupunktes in den Stufen wird die Wasserdampfkondensation ausgeführt.

Während der Wasserdampfkondensation verringert sich dessen Menge im Luftstrom innerhalb des Abschnittes für dessen künstliche Abkühlung, was seinerseits zur kontinuierlichen Senkung der Temperatur des Taupunktes innerhalb dieses Abschnittes führt und den Kondensationsprozess verlangsamt.

Es ist eine Einrichtung zur Wasserextraktion aus Luft (s.dito) bekannt, welche einen Kanal zur Beförderung des Luftstroms enthält, in welchem ein Kühlelement der Kälteanlage, ein Wärmetauscher und ein Ventilator aufgestellt sind. Der Wärmetauscher ist als ein Mehrsektionen-Wärmetauscher ausgeführt, in dessen jeder Sektion die Wärmeaustauschelemente an den verschiedenen Seiten vom Kühlelement angeordnet sind. Nach dem Wärmestrom ist das erste Wärmeaustauschelemet mit dem n. Element, das zweite Wärmetauschelement mit dem (n-1). Element und weiter das Element n/2 - mit dem Element (n/2+1) verbunden.

Die wesentliche Abnahme der absoluten Feuchtigkeit der Luft bei deren Durchfluss durch das Kühlelement und die entsprechende Reduzierung der Temperatur des Taupunktes führen zu einer so heftigen Abkühlung des Luftstromes innerhalb dieses Elementes, bei welcher sich ihre Wärmewechselwirkung mit dem Kühlelement reduziert und sich der Wasserdampfkondensationsprozess wesentlich verlangsamt.

In der FR 2 672 970 A1 wird eine Entfeuchtungsanlage beschrieben, bei der der Luftstrom in einem Kanal von statischen Verdampfern abgekühlt wird und während dieser Abkühlung eine erste Kondensation des in der Luft enthaltenen Wassers stattfindet.

Die Luft gelangt danach auf einen Verdampfer der Bestandteil einer Wärmepumpe ist. Auf diesem Austauscher wird die feuchte Luft erneut und intensiver gekühlt, wodurch der größte Teil des in der Luft enthaltenen Wassers kondensiert.

Die Kondensate werden in einem Behälter, gesammelt und über ein Leitungssystem abgeleitet.

Nach der Entfeuchtung gelangt die kalte Luft in den oberen Teil des Gerätes, wo sie in statischen Kondensatoren Wärme aufnimmt, die von den statischen Verdampfern entzogen wurde.

Der den Luftstrom bewirkende Ventilator ist am Ende dieser Anlage angeordnet. Insoweit weist diese Entfeuchtungsanlage Ähnlichkeit mit der eingangs in der RU,A,2081256 beschriebenen auf Unberücksichtigt bleiben bei diesen Lösungen Überlegungen dahingehend, durch eine vorteilhafte Anordnung der einzelnen Bauelemente den Massedurchsatz und damit die Menge kondensierten Wassers zu erhöhen.

Offenbarung der Erfindung

Dieser Erfindung wurde die Aufgabe zugrunde gelegt, ein Verfahren zur Wasserextraktion aus Luft zu entwickeln, welches die Sicherung einer wirksamen Wasserdampfkondensation in der ausgedehnten Zone des Luftstromes sicherstellt, sowie eine Einrichtung zu dessen Ausführung zu schaffen, deren Bauart die Wärmewechselwirkung des Luftstromes mit dem Kühlsystem gleichmäßig längs der Bewegung des Luftstromes ermöglicht, dabei den gesamten Kältefaktor der einzusetzenden Kälteanlage zu erhöhen und die Menge der kondensierten Wasserdämpfe zu steigern.

Die gestellte Aufgabe wird durch ein Verfahren gelöst bei dem ein Luftstrom zwangsbewegt einen Kanal in Abschnitten nach einander durchströmt,

- beginnend mit Abschnitten ($3_1$ - $3_n$) zur Vorkühlung der Luft maximal bis zur Temperatur des Taupunktes ($T_{dp1}$) mittels Wärmetauschern,
- folgenden Abschnitten zur stufenweisen Abkühlung der Luft in Bereiche ≤ Taupunkt zur Kondensation der Wasserdämpfe durch Wärmeableitung mittels Wärmeableitungselementen nach außerhalb des Kanals und
- anschließenden Abschnitten ($3_{n+1}$ - $3_{2n}$) mit Lufterwärmung durch Wärmetauscher,

wobei zwischen den Wärmetauschern der Vorkühlung und den Wärmetauschern der Lufterwärmung, jeweils paarweise und von außen beginnend, jeweils ein Wärmetransportkreislauf unter Verwendung eines Wärmetransportmittels organisiert ist und die Zwangsbewegung des Luftstromes mindestens durch eine unmittelbar hinter den Abschnitten erzeugte Druckdifferenz erzeugt wird. Das Vorliegen von zwei und mehr Abschnitten für die Ableitung der Wärmeenergie erlaubt die Temperatur des Taupunktes in einem breiteren

Temperaturbereich zu senken und folglich eine größere Menge von Wasserdämpfen zu kondensieren.

Zur Steigerung der Masse der gepumpten Luft wird die Krafteinwirkung darauf im kältesten Teil ihres Stromes organisiert, wo die Luftdichte maximal ist. Dafür wird der Luftstrom durch die Druckdifferenz erzeugt, welche unmittelbar hinter den Abschnitten für die Zwangsableitung der Wärmeenergie in Bewegungsrichtung des Luftstromes erzeugt wird.

Zur Gewinnung eines reineren Wasserkondensats im Luftstrom vor dem ersten Wärmeaustauschabschnitt wird die Luft von den darin schwebenden Teilchen gereinigt.

Zur Entkeimung des Wasserkondensats im Luftstrom vor dem ersten Wärmeaustauschabschnitt wird es ozonisiert.

Zur komplexen Reinigung des kondensierten Wassers von unlöslichen Teilchen und pathogenen Mikroben werden gleichzeitig die Luftozonisierung und die Reinigung von den darin schwebenden Teilchen im Luftstrom vor dem ersten Wärmeaustauschabschnitt ausgeführt.

Zur Organisation des Wärmeaustausches zwischen den Wärmeaustauschabschnitten des Luftstromes wird Wärmeübertragung in jedem Wärmeaustauschabschnittspaar unter Verwendung von Zustandsänderungen des wärmeübertragenden Stoffes ausgeführt.

Als eine weitere Variante des Wärmeaustausches zwischen den Wärmeaustauschabschnitten des Luftstromes wird die Wärmeübertragung in jedem Wärmeaustauschabschnittspaar mittels eines Stoffes mit hoher Wärmeleitfähigkeit ausgeführt.

Zur Vereinfachung des Wärmeaustauschprozesses und zu dessen Intensivierung wird die Wärmeübertragung in jedem Wärmeaustauschabschnittspaar mittels eines flüssigen Zwischenwärmeträgers ausgeführt, als solches wird Wasser verwendet, welchem ein die Wassereinfriertemperatur senkender Stoff zugesetzt werden kann. Als ein die Wassereinfriertemperatur senkender Stoff kann Alkohol bzw. Kochsalz verwendet werden.

Die gestellte Aufgabe wird auch durch eine Einrichtung gelöst, bei der in einem Kanal ein Luftstrom zwangsbewegt durch mindestens einen im Kanal angeordneten Ventilator an abschnittsweise angeordneten Wärmetauschern und Wärmeableitungselementen vorbeiströmt, derart, dass in 1. Abschnitten Wärmetauscher zur Vorkühlung der Luft maximal bis zur Temperatur des Taupunktes ($T_{dp1}$)angeordnet sind, in folgenden 2. Abschnitten sich Wärmeableitungselemente befinden, die von außerhalb des Kanals zwangsgekühlt sind und die Luft auf ein Temperaturniveau ≤ Taupunkt abkühlen, wobei das kondensierte Wasser in einem Kondensatsammeltopf gesammelt und nach außen abgeleitet wird und in 3. Abschnitten sich erneut Wärmetauscher befinden, die eine Lufterwärmung bewirken, wobei die Wärmetauscher der 1. und der 3. Abschnitte paarweise und von außen beginnend durch Verrohrungen miteinander zur Bildung jeweils eines Wärmetransportkreislaufes verbunden sind und ein Ventilator in Strömungsrichtung nach dem letzten Wärmeableitungselement der 2. Abschnitte und vor dem ersten Wärmetauscher der 3. Abschnitte angeordnet ist.

Zur Steigerung der Menge der zu befördernden Luft ist es sachdienlich, den Ventilator im Kanal zwischen dem letzten Wärmeaustauschelement in Bewegungsrichtung des Luftstromes und dem "n+1". Wärmeaustauschelement zu aufzustellen.

Zur Reinigung des Luftstromes von Schwebeteilchen enthält die Einrichtung ein Luftfilter, welches am Eintritt des Kanals für die Luftbeförderung aufgestellt ist. Das angegebene Luftfilter kann als ein senkrecht angebrachter sich nach unten aufweitender Luftansaugstutzen sowie als ein elektrisches Schwebeteilchenfilter ausgeführt sein.

Zur Reinigung der Luft und des Wasserdampfes von pathogenen Mikroben enthält die Einrichtung einen Luftozonisator, welcher am Eintritt des Kanals für die Luftbeförderung aufgestellt ist. Darüber hinaus kann zur Ozongewinnung das elektrische Filter angepasst werden.

Zur komplexen Luftreinigung ist ein elektrisches Filter, welches zur Ozongewinnung angepasst ist, in der Einrichtung am Eintritt des Kanals für die Luftbeförderung hinter dem Filter aufgestellt, welches als senkrecht angebrachter, sich nach unten aufweitender Luftansaugstutzen ausgeführt ist.

In der Einrichtung kann als jedes Wärmeaustauschelement ein Verdampfer der Kompressionskältemaschine bzw. ein Kaltlötstellenblock der auf dem Peltier-Effekt aufgebauten Kältemaschine eingesetzt werden. Dabei ist am Austritt des Kanals für die Luftbeförderung jeweils entweder ein Verflüssiger der Kompressionskältemaschine oder ein Heißlötstellenblock der auf dem Peltier-Effekt aufgebauten Kältemaschine aufgestellt.

Zur weiteren Steigerung der Menge der zu befördernden Luft kann wenigstens noch ein weiterer Ventilator im Kanal für die Luftbeförderung aufgestellt werden.

Zur Steigerung der Masse der die Wärmenergie abnehmenden Luft sind Lufteinlassöffnungen an den Wänden des Kanals für die Luftbeförderung hinter dem "2n". Wärmeaustauschelement ausgeführt.

In einer weiteren Ausgestaltung der Erfindung ist vorgesehen, dass in der Verrohrung jedes Wärmekreislaufes zwischen Vorkühlung und Lufterwärmung zum Transport des flüssigen Wärmetransportmittels eine Pumpe angeordnet ist. Die Pumpen der Wärmekreisläufe können dabei zu einer Baugruppe zusammengefasst sein.

Die den jeweiligen Wärmekreislauf bildenden Wärmetauschelemente der Abschnitte 1 und 3 können alternativ auch durch Verrohrungen in Form von Wärmerohren untereinander verbunden sein.

Ebenso können die den Wärmekreislauf bildenden Verrohrungen zwischen den Wärmeaustauschern als metallene Wärmeleitungselemente ausgeführt sein.

Zur vollen Sammlung des kondensierten Wassers ist es sachdienlich, dass der Kondensatsammeltopf mit einem Teil des Kanals für die Luftbeförderung kom-

niziert, welcher die ersten "n" Wärmeaustauschelemente und die gesamten Wärmeableitungselemente umfasst.

Kurzverzeichnis der Zeichnungen

Nachfolgend wird die beanspruchte Erfindung anhand konkreter Ausführungsbeispielen und beigefügter Zeichnungen erläutert, in welchen

Fig. 1 schematisch den Prozess der Wasserextraktion aus Luft zeigt, welcher durch das Diagramm der Lufttemperaturänderung in Bewegungsrichtung des Luftstromes begleitet ist;

Fig. 2 die Dynamik der Zustandsänderung der Luft bei ihrem Erreichen der Temperatur des Taupunktes, während der Flüssigkeitskondensation und der weiteren Erwärmung erläutert;

Fig. 3 die gleichzeitige Reinigung der Luft von den darin schwebenden Teilchen und ihre Ozonisierung illustriert;

Fig. 4 schematisch die Variante der Einrichtung zur Wasserextraktion aus Luft mit der Kompressionskältemaschine und unter Verwendung des flüssigen Wärmeträgers für den Wärmeaustausch zeigt;

Fig. 5 schematisch die Konstruktion der zu einer Einheit zusammengefassten Filter und des Ozonisators zeigt;

Fig. 6 schematisch die Variante der Einrichtung zur Wasserextraktion aus Luft mit der auf dem Peltier-Effekt aufgebauten Kältemaschine und unter Einsatz eines zusätzlichen Ventilators, der Lufteinlassöffnungen und Wärmerohre zeigt;

Fig. 7 schematisch die Variante der Einrichtung zur Wasserextraktion aus Luft zeigt, bei welcher die Wärmeübertragung zwischen den Wärmeaustauschelementen unter Einsatz von Wärmeableitungselementen ausgeführt ist.

Die beste Ausführungsvariante zur Ausführung des Verfahrens

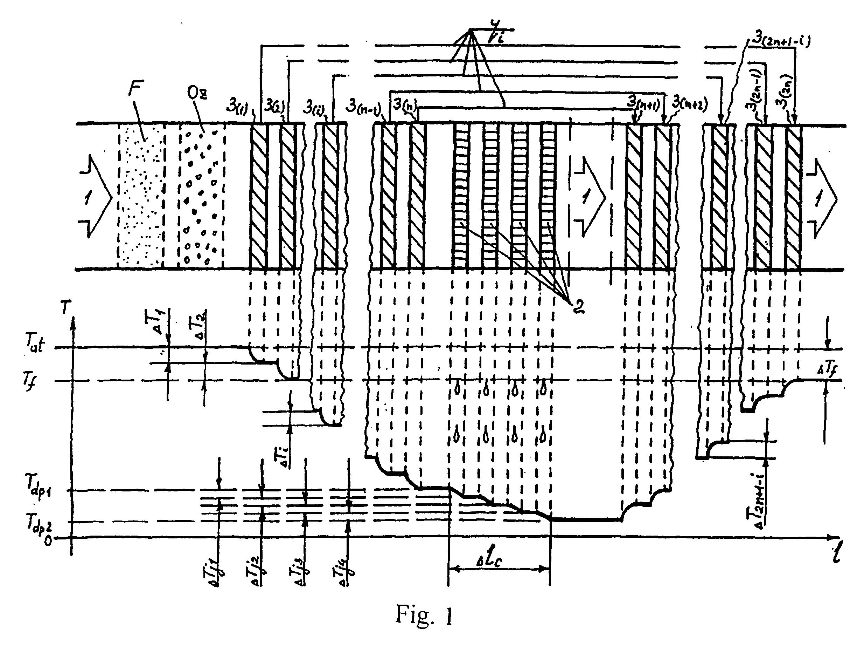

Das erfindungsgemäße Verfahren zur Wasserextraktion aus Luft besteht darin, dass der Luftstrom 1 (Fig. 1) erzeugt wird, an dessen Abschnitten 2 die Zwangsableitung der Wärmeenergie vom Luftstrom 1 ausgeführt wird. Gleichzeitig wird der Wärmeaustausch zwischen "2n" Wärmeaustauschabschnitten $3_1$ - $3_{2n}$ des Luftstromes 1 organisiert, welche paarweise so gruppiert sind, dass die Abschnitte $3_1$ und $3_{n+1}$ und so weiter in jedem Paar an den verschiedenen Seiten von der Abschnittsgruppe 2 angeordnet sind.

Dabei sind die ersten in Bewegungsrichtung "I" des Stromes 1 "n" Wärmeaustauschabschnitte $3_1$- $3_n$ nacheinander angebracht und vor den Abschnitten 2 angeordnet, und die Abschnitte 3 von "n+1" bis "2n" sind hinter den Abschnitten 2 für die Zwangsableitung der Wärmeenergie aufgestellt. In jedem Paar der Wärmeaustauschelemente $3_1$ - $3_{2n}$ wird die Übertragung der Wärmeenergie $q_i$ vom Abschnitt $3_i$ zum Abschnitt $3_{2n+1-i}$ ausgeführt.

Die Zwangsableitung der Wärmeenergie vom Strom 1 an den Abschnitten 2 führt zur Luftabkühlung hinter diesen Abschnitten und zur Überströmung der Wärmeenergie $q_i$ von den "i". Wärmetauschabschnitten 3 zu den "2n+1-i". Wärmeaustauschabschnitten 3. Die genannte Überströmung der Wärmeenergie $q_i$ bewirkt eine Vorkühlung der Luft im Strom 1 vor den Abschnitten 2. So wird die Außenluft von der Anfangstemperatur $T_{at}$, indem sie durch die ersten "n" Wärmeaustauschelemente $3_1$ - $3_n$ durchfließt, am ersten Wärmetauschabschnitt $3_1$ um die Größe $\Delta T_1$, am zweiten um die Größe $\Delta T_2$, am "i". Wärmetauschabschnitt um die Größe $\Delta T_i$ und so weiter solange abgekühlt, bis die Lufttemperatur bis zur Temperatur des Taupunktes $T_{dp1}$ absinkt. In Fig. 1 erreicht die Lufttemperatur im Strom 1 den Wert $T_{dp1}$ vor dem ersten Abschnitt 2 für die Zwangsableitung der Wärmeenergie.

Die weitere Luftabkühlung im Strom 1 führt zum Beginn der Kondensation der Wasserdämpfe, welche in diesem Strom enthalten sind, dabei geht die Geschwindigkeit der Lufttemperatursenkung im Strom 1 zurück, denn bei der Wasserdampfkondensation wird an den Abschnitten ihrer Kondensation eine erhebliche Wärmeenergie abgegeben. Die Größen $\Delta T_{j1}$-$\Delta T_{j4}$ veranschaulichen den Charakter der Lufttemperatursenkung in der Kondensationszone $\Delta I_c$. Die Wasserextraktion aus Luft in der Kondensationszone $\Delta I_c$ führt zur kontinuierlichen Reduzierung der absoluten Feuchtigkeit dieser Luft und als Folge zur Senkung der Temperatur des Taupunktes von $T_{dp1}$ bis $T_{dp2}$.

Weiter steigt die Lufttemperatur im Strom 1, nachdem der Strom 1 den letzten Abschnitt 2 passiert, infolge der Überströmung der Wärmeenergie $q_i$ an jedem Wärmeaustauschelement 3 vom "n+1".Wärmetauschabschnitt bis zum "2n". Abschnitt 3. Dabei außerhalb der Kondensationszone $\Delta I_c$ ist $\Delta T_i = \Delta T_{2n+1-i}$, denn die Wärmeenergie $q_i$ vom Wärmetauschabschnitt $3_i$ kommt der gleichen Menge der durchfließenden Luft am Wärmetauschabschnitt $3_{2n+1-i}$ zu. Abgesehen von den Wärmeverlusten für die hier nicht berücksichtigten, in den realen Situationen üblichen Wärmeprozesse, ist die Temperaturdifferenz $\Delta T_f$ zwischen der Eintrittslufttemperatur und Austrittslufttemperatur der an den Abschnitten 2 entstehenden Temperatursummendifferenz gleich.

Bei der intensiven Wasserentnahme kann die Differenz zwischen dem Anfangswert und Endwert $T_{dp1}$ und $T_{dp2}$ der Temperatur des Taupunktes erheblich sein. In diesem Fall kann die Größe der vom Strom 1 abzuleitenden Wärmeenergie, in welcher die Wasserkondensationsenergie und die Luftabkühlungsenergie summiert sind, so groß sein, dass ihre Zwangsableitung allein am Abschnitt 2 mit unüberwindlichen technischen Schwierigkeiten zusammenhängen wird. Gerade deswegen ist es sachdienlich, die Anzahl der Abschnitte 2 bis auf mehrere Abschnitte zu erhöhen. Dies erlaubt den Wasserextraktionsprozess wesentlich zu intensivieren.

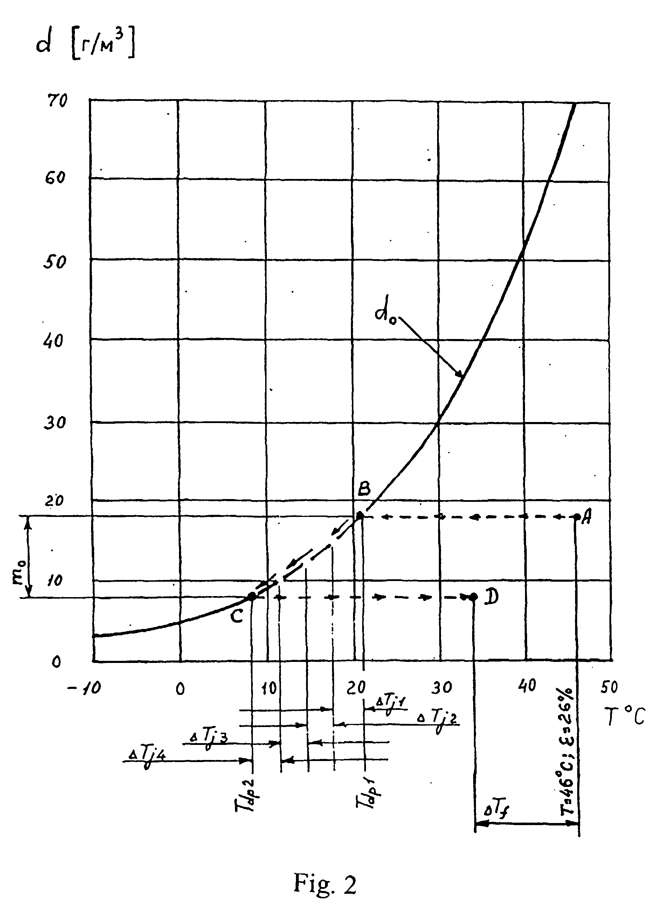

Der behandelte Prozess ist in Fig. 2 veranschaulicht, wo waagerecht die Lufttemperaturwerte und senkrecht die absolute Feuchtigkeitswerte d, ausgedrückt in Grammen der pro 1 $m^3$ Luft enthaltenen Wasserdämpfe, angegebenen sind. Die Kurve $d_o$ entspricht der relativen Feuchtigkeit $\varepsilon$, welche 100% gleich ist. Zur Betrachtung des Prozesses wurde als Ausgangszustand der Luft am Anfang des Stromes 1 beliebig Punkt A ausgewählt, welcher d = 18g/$m^3$; T = 46°C; $\varepsilon$ = 26% entspricht. Bei der Bewegung der Luft im Strom 1 geht ihre Temperatur zurück und der Wert d bleibt zunächst unverändert bis zum Erreichen von Punkt B des Luftzustandes, wo $\varepsilon$ = 100%; T = 21°C sind. Weiter erfolgen die Temperatursenkung und der Rückgang des Wertes d nach der Kurve $d_o$ mit der gleichzeitigen Flüssigkeitskondensation, bei welcher die Wassermenge $m_o$ (in Fig. 2 $m_o$ =10 g/$m^3$) pro Kubikmeter Luft kondensiert und der Luftzustand geht in Punkt C über. Danach erwärmt sich die Luft, ohne ihre absolute Feuchtigkeit zu verändern, und ihr Zustand geht in Punkt D über.

Da die Dichte der Luft beim Rückgang ihrer Temperatur steigt, erreicht die Luftdichte im Strom 1 ihren maximalen Wert dort, wo ihre Temperatur minimal ist, unmittelbar hinter den Abschnitten 2. Deswegen ist es sachdienlich, gerade in diesem Teil des Stromes 1 die Druckdifferenz zur Erzeugung dieses Stromes 1 zu erzeugen, um bei demselben Volumen der Luft ihre Masse zu steigern, welche durch den Querschnitt des Stromes 1 pro Zeiteinheit durchfließt, und letztlich die Menge des kondensierten Wassers zu steigern.

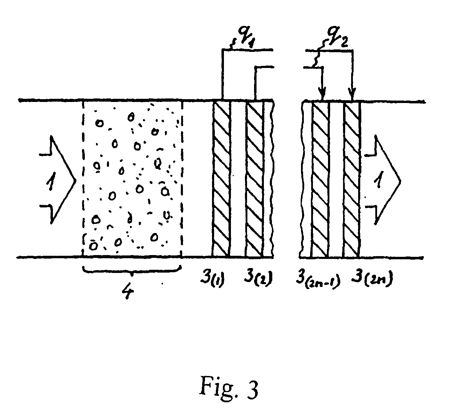

Zur Verbesserung der Qualität des zu gewinnenden Wassers ist es sachdienlich, im Anfangsteil des Stromes 1 (Fig. 1) die Reinigung der Luft von den darin schwebenden Teilchen in der Filtrationszone F sowie die Ozonisierung in der Zone $Q_z$ zur Vernichtung von pathogenen Bakterien im zu gewinnenden Wasser als primäre Luftaufbereitung durchzuführen. In Fig. 3 ist die Zone für die primäre Luftaufbereitung als Zone 4 bezeichnet, wo die Filtrations- und Ozonisierungsprozesse vereint sind.

Zur Ausführung der Wärmeübertragung zwischen den Wärmetauschabschnitten $3_1$ - $3_{2n}$ in jedem Paar können die Zustandsänderungen des wärmeübertragenden Stoffes so genutzt werden, wie dies in den Wärmerohren erfolgt. Die Wärmeübertragung kann unter Verwendung eines Stoffes mit hoher Wärmeleitfähigkeit, beispielsweise Kupfer, oder mittels eines flüssigen Zwischenwärmeträgers ausgeführt werden, als solches ist es sachdienlich, Wasser zu verwenden. Um die eventuelle Wassereinfrierung bei geringen negativen Temperaturen auszuschließen, kann dem Wärmeträgerwasser ein Stoff zugesetzt werden, welcher die Einfriertemperatur der dadurch entstehenden Mischung senkt. Es ist sachdienlich, als solchen wünschenswert nicht toxischen Stoffes Alkohol bzw. Kochsalz zu verwenden.

Es ist sachdienlich, den Ventilator 6 direkt hinter den Wärmeableitungselementen 7 dort anzubringen, wo die Lufttemperatur im Strom 1 minimal und die Luftdichte maximal ist. Dabei kann der Ventilator 6 die maximale Luftmenge durch den Kanal 5 fördern.

Es ist sachdienlich, am Eintritt des Kanals 5 das Luftfilter 10 aufzustellen. Das Luftgrobfilter für große Schwebeteilchen kann als ein senkrecht angebrachter sich nach unten aufweitender Luftansaugstutzen 11 ausgeführt sein. Auch dort am Eintritt des Kanals 5 kann der Luftozonisator 12 zur Entkeimung der Luft und des Wasserkondensats von den pathogenen Bakterien aufgestellt werden.

Die Wärmeableitungselemente 7 sind ein Teil der Kältemaschine. Als eine solche Maschine kann eine Kompressionskältemaschine eingesetzt werden, welche den Verdichter 13, den Verflüssiger 14 und den als Wärmeableitungselemente 7 ausgeführten Verdampfer enthält. Dabei sind der Verdichter 13, den Verflüssiger 14

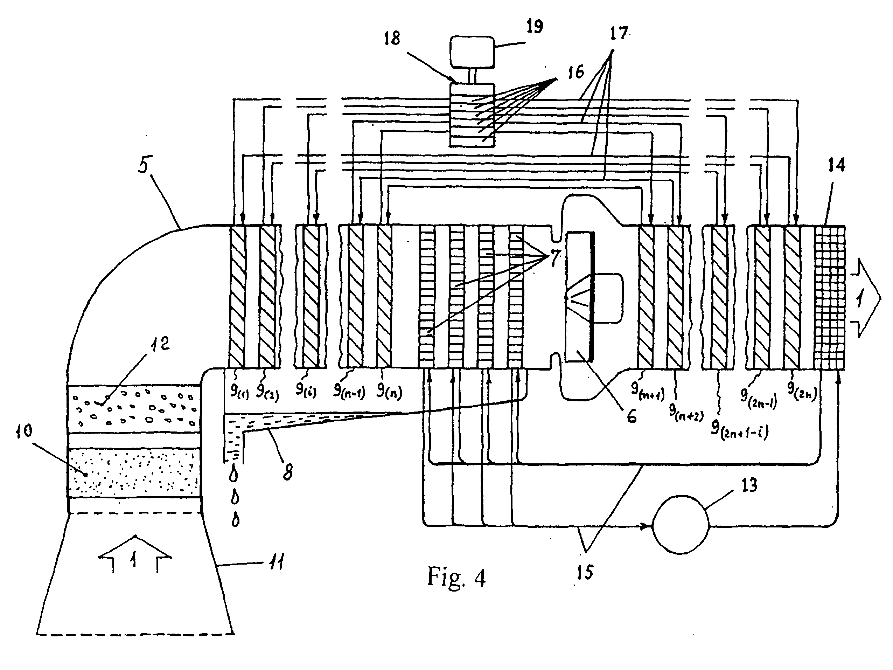

Die Einrichtung zur Wasserextraktion aus Luft enthält den Kanal 5 (Fig. 4) für die Beförderung des Luftstromes 1. Im Kanal 5 sind der Ventilator 6, die Wärmeableitungselemente 7, der Wasserkondensatsammeltopf 8, der Mehrsektionen-Wärmetauscher angebracht, welcher "2n" Wärmeaustauscher $9_1$ - $9_{2n}$ enthält, aus welchen die ersten "n" vor den Wärmeableitungselementen 7 und die Wärmeaustauscher "n+1" bis "2n" hinter den Wärmeableitungselementen 7 in Bewegungsrichtung der Luft im Kanal 5 angeordnet sind. Die Wärmeaustauscher $9_1$ - $9_{2n}$ usw. sind in Wärmekreisläufen zusammengestellt, jede davon enthält zwei Wärmeaustauscher. Die Wärmeaustauscher $9_1$ und $9_{n+1}$ eines Wärmekreislaufes sind an den verschiedenen Seiten der Wärmeableitungselemente 7 angeordnet und sind miteinander nach dem Wärmestrom so verbunden, dass der "i". Wärmeaustauscher $9_i$ mit dem "2n+1-i". Wärmetauscher $9_{2n+1-i}$ verbunden ist. und die Wärmeableitungselemente 7 durch die Verrohrung 15 für das Kältemittel verbunden und der Verflüssiger 14 ist am Austritt des Kanals 5 aufgestellt.

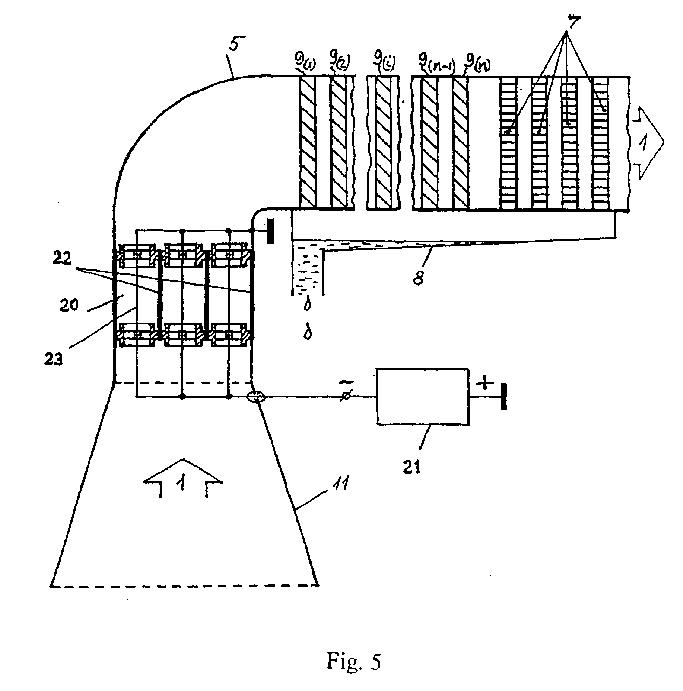

Als Luftfilter für die komplexe Luftreinigung kann das elektrische Filter 20 (Fig. 5) eingesetzt werden, welches an die Hochspannungsquelle 21 angeschlossen ist. Das Filter 20 kann als Bündel der Parallelzylinder 22 mit isolierten Axialdrahtelektroden 23 ausgeführt sein. Das gleiche Filter 20 kann das Ozon erzeugen, dabei werden das Filter 10 und der Ozonisator 12 zu einer Baugruppe zusammengefasst.

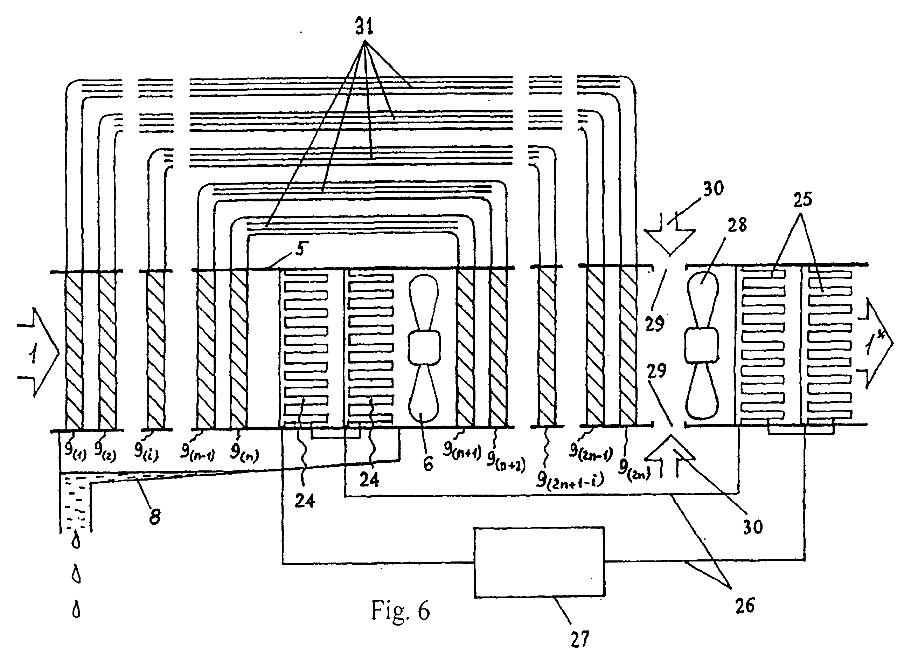

Bei Einsatz der auf dem Peltier-Effekt aufgebauten Kältemaschine kann jedes Wärmeableitungselement 7 (Fig. 6) als ein Kaltlötstellenblock 24 ausgeführt werden. In diesem Fall werden die Heißlötstellenblöcke 25 am Austritt des Kanals 5 aufgestellt, dabei sind die Blöcke 24 und 25 mittels der Leiter 26 zu einem geschlossenen Stromkreis geschaltet. In denselben Stromkreis ist die Stromquelle 27 geschaltet, an welche die Blöcke 24 und 25 angeschlossen sind.

Zur intensiveren Abkühlung der Heißlötstellenblöcke 25 bzw. des Verflüssigers 14 sowie zur Intensivierung des Luftstromes 1 im Kanal 5 kann im letzteren wenigstens noch ein weiterer Ventilator 28 aufgestellt werden. Zu einer noch intensiveren Abkühlung des Verflüssigers 14 bzw. der Heißlötstellenblöcke 25 können an den Wänden des Kanals 5 hinter dem Wärmeaustauschelement $9_{2n}$ die Lufteinlassöffnungen 29 für den zusätzlichen Luftzustrom 30 ausgeführt werden.

Zur Sicherstellung der Verbindung nach dem Wärmestrom qi zwischen den Wärmeaustauschern $9_1$ - $9_{2n}$ usw. ist in jedem Wärmekreislauf eine Pumpe 16 zum Pumpen des flüssigen Wärmeträgers durch die Verrohrung 17 vorgesehen, welche zusammen mit den Wärmetauschern $9_1$ - $9_{2n}$ ein geschlossenes Ringsystem für die Bewegung des flüssigen Wärmeträgers bilden. Die Pumpen 16 aller Kreisläufe können zu einer Baugruppe 18 zusammengefasst werden, welche durch den gemeinsamen Motor 19 angetrieben wird.

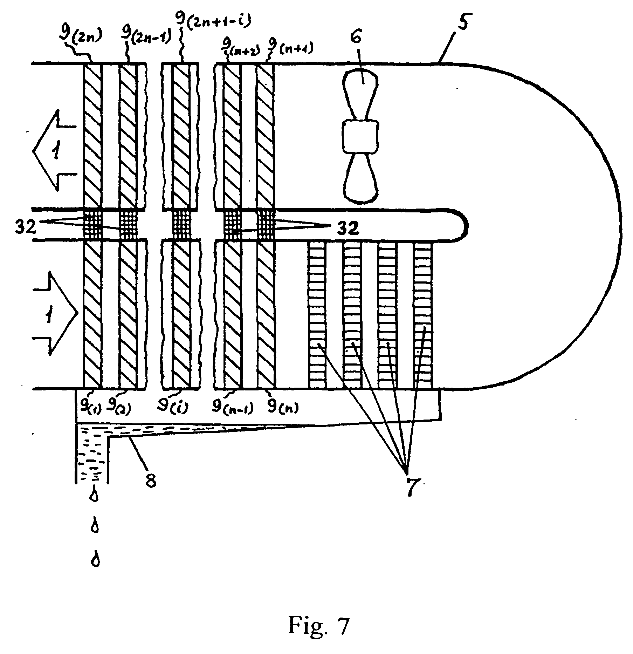

Die Wärmeverbindung zwischen den Wärmeaustauschelementen $9_1$ - $9_{2n}$ usw. jedes Kreislautes kann mittels der Wärmerohre 31 ausgeführt werden. Darüber hinaus kann die in Betracht gezogene Verbindung nach dem Wärmestrom $q_i$ mittels metallener Wärmeleitungselemente 32 (Fig. 7) ausgeführt werden.

In allen Varianten der Einrichtung zur Wasserextraktion aus Luft kommuniziert der Wasserkondensatsammeltopf 8 mit einem Teil des Kanals 5, welcher die ersten "n" Wärmeaustauschen $9_1$ - $9_n$ und die gesamten Wärmeableitungselemente 7 umfasst.

Die beanspruchte Einrichtung funktioniert folgenderweise:

Der Ventilator 6 (Fig. 4, 6 und 7), welcher den Luftstrom 1 in den Kanal 5 ausrichtet, wird eingeschaltet und die Kältemaschine wird in Betrieb gesetzt. Beim Vorliegen von zusätzlichen Ventilatoren 28 (Fig. 6) werden diese auch zusammen mit dem Ventilator 6 eingeschaltet. Die Wärmeableitungselemente 7 beginnen die durch sie durchfließende Luft abzukühlen. Die auf diese Weise abgekühlte Luft kühlt die Wärmeaustauscher $9_{n+1}$ - $9_{2n}$ ab, welche hinter den Wärmeableitungselementen 7 angeordnet sind. Über die Wärmeverbindung zwischen diesen klärmetauschern $9_{n+1}$- $9_{2n}$ und ihren Paarelementen $9_1$ - $9_n$, welche zum jeweiligen Kreislauf gehören und im Kanal 5 vor den Wärmeableitungselementen 7 angeordnet sind, beginnt dabei die Wärmeenergieüberströmung von den ersten "n" Wärmeaustauschern $9_1$- $9_n$ zu den abzukühlenden Wärmeaustauschern $9_{n+1}$- $9_{2n}$. Eine gewisse Zeit nach dem Einschalten der gesamten Systeme der Einrichtung stellen sich im Kanal 5 die in Fig. 1 gezeigten Temperaturverhältnisse ein: die Lufttemperatur sinkt zunächst stufenweise im Intervall vom ersten Wärmeaustauscher $9_1$ bis zum letzten Wärmeableitungselement 7 und steigt dann auch stufenweise bis zum Wert, welcher etwas geringer als Temperatur $T_{at}$ der Eintrittsluft ist.

Die erwähnte Wärmeenergieüberströmung kann mittels des flüssigen Wärmeträgers ausgeführt werden, welcher mit den Pumpen 16 (Fig. 4) durch die Verrohrung 17 in jedem Kreislaut gefördert wird, welche ein Paar der Wärmeaustauscher den "i". Wärmetauscher und den "2n+1-i". Wärmeaustauscher $9_i$ und $9_{2n+1-i}$ enthält, wo sich "i" von eins bis "n" ändert. Die gleiche Wärmeenergieüberströmung kann mittels der Wärmerohre 31 (Fig. 6) bzw. mittels metallener Wärmeleitungselemente 32 (Fig. 7) ausgeführt werden.

Die von der abzukühlenden Luft abgenommene Wärmeenergie sowie die Energie, welche sich in der die ersten "n" Wärmeaustauschern $9_i$ - $9_n$ und die gesamten Wärmeableitungselemente 7 bzw. die Kaltlötstellenblöcke 24 umfassenden Kondensationszone $\Delta I_c$ freisetzt, werden dem aus dem Kanal 5 austretenden Luftstrom 1 mittels des Verflüssigers 14 der Kompressionskältemaschine bzw. der Heißlötstellenblöcke 25 der auf dem Peltier-Effekt aufgebauten Kältemaschine übertragen.

Zur Intensivierung des Prozesses der Wärmeenergieübertragung an die Luft kann ein zusätzlicher Luftzustrom 30 (Fig. 6) organisiert werden, welcher am Austritt des Kanals 5 durch die Lufteinlassöffnungen 29 ankommt, dabei setzt sich der Summenluftstrom 1* aus dem Strom 1 und dem zusätzlichen Zustrom 30 zusammen.

Also, der aus dem Kanal 5 austretende Luftstrom 1 bzw. 1* trägt die Wärmeenergie weg, welche sich in der Einrichtung bei deren Betrieb freigesetzt hat.

Das Luftgrobfilter für Schwebeteilchen, welches als ein senkrecht angebrachter sich nach unten aufweitender Luftansaugsstutzen 11 ausgeführt ist, funktioniert nach dem Prinzip der Gegenwirkung der Schwerkraft $G_m$ dieser Teilchen und der Kraft $G_a$ der Einwirkung des Stromes 1 auf diese Teilchen. Dabei fällt ein solches Teilchen nach unten, falls $G_a < G_m$, und gelangt in den Kanal 5 nicht.

Es ist bekannt, dass:

$$G_a = K_1 \cdot S_p \cdot \rho_a \cdot v_a^2$$

$$(1)$$

wo: $K_1$ - Teilchen-Formfaktor,
$S_p$-Teilchen-Querschnittfläche,
$\rho_a$-Luftdichte,
$v_a^2$ - Luftdtromgeschwindigkeit.

$$G_m = g \cdot m_p$$

$$(2)$$

wo: g - Fallbeschleunigung,
$m_p$ - Teilchenmasse.

Falls man die Dichte des Teilchenstoffes mit $p_p$ bezeichnet und annimmt, dass dessen Form der Kugelform nah ist, so werden in den Strom 1 die Teilchen ein-

bezogen, deren Durchmesser $d_{p1}$ geringer als d* ist:

$$d^* = 1,5 \, K_1 \cdot (\rho_{a} / \rho_p \cdot g) \cdot v_a^2$$

$$(3)$$

Man kann den Wert $v_a$ berechnen, indem man das Volumen $V_o$ der durch den Kanal 5 pro Sekunde durchfließenden Luft und den Eintrittsdurchmesser $d_f$ des Luftansaugstutzens 11 kennt:

$$v_a = 4V_o / \pi \cdot d_f^2$$

$$(4)$$

Aus (3) und (4) folgt:

$$d^* = 2,43 \, K_1 \cdot (\rho_a \cdot V_o^2 / \rho_p \cdot g \cdot d_f^4)$$

$$(5)$$

Also, der Durchmesser dp des einbezogenen Teilchens ist umgekehrt proportional der vierten Potenz des Durchmessers des größten Querschnitts des kegelförmigen Luftansaugstutzens 11 und der Luftansaugstutzen 11 selbst ist dabei ein hochwirksames Filter.

Das in Fig. 5 angeführte elektrische Filter 20 funktioniert folgenderweise. Die Hochspannungsquelle 21 erzeugt eine Potentialdifferenz zwischen den Zylindern 22 und dünnen Drahtelektroden 23, welche ausreichend dafür ist, dass an der Oberfläche der an die negative Klemme der Quelle 21 angeschlossenen Drahtelektroden 32 die elektrische Koronaentladung entsteht, in welcher sich die Ozonmoleküle und Ionen infolge der Ionisation der durchfließenden Luft bilden. Das Ozon wird von der Luft mitgerissen und die negativen Ionen haften an den im Strom 1 schwebenden Teilchen, indem sie sich unter Einwirkung des elektrischen Feldes zur Innenoberfläche der Zylinder 22 bewegen. Die elektrisch geladenen Teilchen kommen unter Einwirkung desselben elektrischen Feldes an der Innenfläche der Zylinder 22 an und werden dort abgefangen. Das Ozon löst sich zum Teil im sich kondensierenden Wasser, entkeimt das Wasser sowie seinen gesamten weiteren Bewegungstrakt.

Die beanspruchte Erfindung erlaubt die aus Luft zu extrahierende Wassermenge zu steigern, das Wasser von unlöslichen Begleitelementen und pathogenen Bakterien zu reinigen.

Die gewerbliche Anwendbarkeit

Die beanspruchte Erfindung kann unter Feldbedingungen, in der Landwirtschaft und im Haushalt als eine alternative Süßwasserquelle genutzt werden.

**Patentansprüche**

1. Verfahren zur Wasserextraktion aus der Luft, bei dem ein Luftstrom (1) zwangsbewegt einen Kanal (5) in Abschnitten nach einander durchströmt,

    - beginnend mit Abschnitten ($3_1 - 3_n$) zur Vorkühlung der Luft maximal bis zur Temperatur des Taupunktes ($T_{dp1}$) mittels Wärmetauschern ($9_1 - 9_n$),
    - folgenden Abschnitten (2) zur stufenweisen Abkühlung der Luft in Bereiche $\leq$ Taupunkt zur Kondensation der Wasserdämpfe durch Wärmeableitung mittels Wärmeableitungselementen (7) nach außerhalb des Kanals (5) und
    - anschließenden Abschnitten ($3_{n+1} - 3_{2n}$) mit Lufterwärmung durch Wärmetauscher ($9_{n+1} - 9_{2n}$),

    wobei zwischen den Wärmetauschern der Vorkühlung und den Wärmetauschern der Lufterwärmung, jeweils paarweise und von außen beginnend, jeweils ein Wärmetransportkreislauf ($9_1 - 9_{2n}$, $9_2 - 9_{2n-1}$, u.s.w. bis $9_n - 9_{n+1}$,) unter Verwendung eines Wärmetransportmittels organisiert ist und die Zwangsbewegung des Luftstromes (1) mindestens durch eine unmittelbar hinter den Abschnitten (2) erzeugte Druckdifferenz erzeugt wird.

2. Verfahren zur Wasserextraktion aus der Luft nach Anspruch 1, **dadurch gekennzeichnet, dass** im Luftstrom (1) vor dem ersten Wärmeaustauschabschnitt die Luft von den darin schwebenden Teilchen gereinigt wird.

3. Verfahren zur Wasserextraktion aus der Luft nach Anspruch 1, **dadurch gekennzeichnet, dass** im Luftstrom (1) vor dem ersten Wärmeaustauschabschnitt die Luft ozonisiert wird.

4. Verfahren zur Wasserextraktion aus der Luft nach Anspruch 1, **dadurch gekennzeichnet, dass** die gleichzeitige Ozonisierung der Luft und die Reinigung von den darin schwebenden Teilchen im Luftstrom vor dem ersten Wärmeaustauschabschnitt ausgeführt wird.

5. Verfahren zur Wasserextraktion aus der Luft nach einem der Ansprüche 1 bis 4, **dadurch gekennzeichnet, dass** die Wärmeübertragung in jedem Wärmeaustauschabschnittspaar ($3_1 - 3_{2n}$) unter Verwendung von Zustandsänderungen des wärmeübertragenden Stof-

**6.** Verfahren zur Wasserextraktion aus der Luft nach einem der Ansprüche 1 bis 4, **dadurch gekennzeichnet, dass** die Wärmeübertragung in jedem Wärmeaustauschabschnittspaar ($3_1$ - $3_{2n}$) mittels eines Stoffes mit hoher Wärmeleitfähigkeit ausgeführt wird.

**7.** Verfahren zur Wasserextraktion aus der Luft nach einem der Ansprüche 1 bis 4, **dadurch gekennzeichnet, dass** der Wärmeaustausch in jedem Wärmeaustauschabschnittspaar ($3_1$ - $3_{2n}$) mittels eines flüssigen Zwischenwärmeträgers ausgeführt wird.

**8.** Verfahren zur Wasserextraktion aus der Luft nach Anspruch 7, **dadurch gekennzeichnet, dass** als flüssiger Zwischenwärmeträger Wasser verwendet wird.

**9.** Verfahren zur Wasserextraktion aus der Luft nach Anspruch 8, **dadurch gekennzeichnet, dass** dem Wasser ein die Wassereinfriertemperatur senkender Stoff zugesetzt wird.

**10.** Verfahren zur Wasserextraktion aus der Luft nach Anspruch 9, **dadurch gekennzeichnet, dass** als die Wassereinfriertemperatur senkender Stoff Alkohol verwendet wird.

**11.** Verfahren zur Wasserextraktion aus der Luft nach Anspruch 9, **dadurch gekennzeichnet, dass** als die Wassereinfriertemperatur senkender Stoff Kochsalz verwendet wird.

**12.** Einrichtung zur Wasserextraktion aus der Luft, bei der in einem Kanal (5) ein Luftstrom (1) zwangsbewegt durch mindestens einen im Kanal (5) angeordneten Ventilator (6) an abschnittsweise angeordneten Wärmetauschern und Wärmeableitungselementen (7) vorbeiströmt, derart,

- dass in 1. Abschnitten Wärmetauscher ($9_1$ - $9_n$) zur Vorkühlung der Luft maximal bis zur Temperatur des Taupunktes ($T_{dp1}$)angeordnet sind,
- in folgenden 2. Abschnitten sich Wärmeableitungselemente (7) befinden, die von außerhalb des Kanals (5) zwangsgekühlt sind und die Luft auf ein Temperaturniveau ≤ Taupunkt abkühlen, wobei das kondensierte Wasser in einem Kondensatsammeltopf (8) gesammelt und nach außen abgeleitet wird und
- in 3. Abschnitten sich erneut Wärmetauscher ($9_{n+1}$ - $9_{2n}$) befinden, die eine Lufterwärmung bewirken, wobei die Wärmetauscher der 1. und der 3. Abschnitte paarweise und von außen beginnend durch Verrohrungen (17) miteinander zur Bildung jeweils eines Wärmetransportkreislaufes ($9_1$ - $9_{2n}$, $9_2$ - $9_{2n-1}$, u.s.w. bis $9_n$ - $9_{n+1}$) verbunden sind und ein Ventilator (6) in Strömungsrichtung nach dem letzten Wärmeableitungselement (7) der 2. Abschnitte und vor dem ersten Wärmetauscher ($9_{n+1}$) der 3. Abschnitte angeordnet ist.

**13.** Einrichtung zur Wasserextraktion aus der Luft nach Anspruch 12, **dadurch gekennzeichnet, dass** sie zusätzlich das Luftfilter (10) enthält, welches am Eintritt des Kanals (5) für die Luftbeförderung angebracht ist.

**14.** Einrichtung zur Wasserextraktion aus der Luft nach Anspruch 13, **dadurch gekennzeichnet, dass** der Luftfilter als ein senkrecht angebrachter sich nach unten aufweitender Luftansaugstutzen (11) ausgeführt ist.

**15.** Einrichtung zur Wasserextraktion aus der Luft nach Anspruch 13, **dadurch gekennzeichnet, dass** der Luftfilter ein elektrisches Filter (20) für Schwebeteilchen ist.

**16.** Einrichtung zur Wasserextraktion aus der Luft nach einem der Ansprüche 12 bis 15, **dadurch gekennzeichnet, dass** sie einen Luftozonisator (12) enthält, welcher am Eintritt des Kanals (5) für die Luftbeförderung angebracht ist.

**17.** Einrichtung zur Wasserextraktion aus der Luft nach Anspruch 15, **dadurch gekennzeichnet, dass** das elektrische Filter (20) für die Ozongewinnung angepasst ist.

**18.** Einrichtung zur Wasserextraktion aus der Luft nach Anspruch 14, **dadurch gekennzeichnet, dass** hinter dem Luftfilter, welcher als ein senkrecht angebrachter sich nach unten aufweitender Luftansaugstutzen (11) ausgeführt ist, das elektrische Filter (20) angebracht ist, welches für die Ozongewinnung angepasst ist.

**19.** Einrichtung zur Wasserextraktion aus der Luft nach einem der Ansprüche 12 bis 18, **dadurch gekennzeichnet, dass** als Wärmeableitungselement (7) ein Verdampfer der Kompressionskältemaschine eingesetzt ist.

**20.** Einrichtung zur Wasserextraktion aus der Luft nach Anspruch 19, **dadurch gekennzeichnet, dass** am Austritt des Kanals (5) für die Luftbeförderung der Verflüssiger (14) der Kompressionskältemaschine angebracht ist.

**21.** Einrichtung zur Wasserextraktion aus der Luft nach einem der Ansprüche 12 bis 18, **dadurch gekennzeichnet, dass** als Wärmeableitungselement (7) der Kaltlötstellenblock (24) der auf dem Peltier-Effekt aufgebauten Kältemaschine verwendet ist.

**22.** Einrichtung zur Wasserextraktion aus der Luft nach Anspruch 21, **dadurch gekennzeichnet, dass** am Austritt des Kanals (5) für die Luftbeförderung der Heißlötstellenblock (25) der auf dem Peltier-Effekt aufgebauten Kältemaschine angebracht ist.

**23.** Einrichtung zur Wasserextraktion aus der Luft nach einem der Ansprüche 12 bis 22, **dadurch gekennzeichnet, dass** im Kanal (5) für die Luftbeförderung nach dem "2n." Wärmetauscher ($9_{2n}$) wenigstens noch ein weiterer Ventilator (28) angebracht ist.

**24.** Einrichtung zur Wasserextraktion aus der Luft nach einem der Ansprüche 21 bis 23, **dadurch gekennzeichnet, dass** die Lufteinlassöffnungen (29) an den Wänden des Kanals (5) für die Luftbeförderung hinter dem "2n". Wärmeaustauscher ($9_{2n}$) ausgeführt sind.

**25.** Einrichtung zur Wasserextraktion aus der Luft nach einem der Ansprüche 12 bis 24, **dadurch gekennzeichnet, dass** in der Verrohrung (17) jedes Wärmekreislaufs ($9_1$ - $9_{2n}$, $9_2$ - $9_{2n-1}$ usw. bis $9_n$ - $9_{n+1}$) eine Pumpe (16) angeordnet ist.

**26.** Einrichtung zur Wasserextraktion aus der Luft nach Anspruch 25, **dadurch gekennzeichnet, dass** die Pumpen (16) der gesamten Wärmekreisläufe zu einer Baugruppe zusammengefasst sind

**27.** Einrichtung zur Wasserextraktion aus der Luft nach einem der Ansprüche 12 bis 24, **dadurch gekennzeichnet, dass** die einen Wärmekreislauf bildenden Wärmeaustauscher ($9_1$- $9_{2n}$, $9_2$ - $9_{2n-1}$ usw. bis $9_n$ - $9_{n+1}$) der Abschnitte 1 und 3 untereinander durch Verrohrungen in Form von Wärmerohren (3) verbunden sind.

**28.** Einrichtung zur Wasserextraktion aus der Luft nach einem der Ansprüche 12 bis 24, **dadurch gekennzeichnet, dass** die den Wärmekreislauf zwischen den Wärmeaustauschern ($9_1$ - $9_{2n}$, $9_2$ - $9_{2n-1}$ usw. bis $9_n$ - $9_{n+1}$) der Abschnitte 1 und 3 bildenden Verrohrungen als metallene Wärmeleitungselemente (32) ausgeführt sind.

**29.** Einrichtung zur Wasserextraktion aus der Luft nach einem der Ansprüche 12 bis 28, **dadurch gekenn-**

**zeichnet, dass** der Wasserkondensatsammeltopf (8) mit einem Teil des Kanals (5) für die Luftbeförderung kommuniziert, welcher die ersten "n" Wärmeaustauscher ($9_n$) und die gesamten Wärmeableitungselemente (7) umfasst.

**Claims**

**1.** Method for the extraction of water from air where an airflow (1) flows by means of forced movement through a channel (5) in successive sections,

- beginning with sections ($3_1$ - $3_n$) for the pre-cooling of the air maximally up to the temperature of the dew point ($T_{dp1}$) by means of heat exchangers ($9_1$ - $9_n$),
- following sections (2) for the step-wise cooling of the air in areas ≤ dew point for the condensation of the water vapours by dissipating the heat to the outside of the channel (5) by means of heat dissipation elements (7), and
- subsequent sections ($3_{n+1}$ - $3_{2n}$) with heating of the air by means of heat exchangers ($9_{n+1}$ - $9_{2n}$),

with a heat transport cycle ($9_1$ - $9_{2n}$, $9_2$ - $9_{2n-1}$, etc. up to $9_n$ - $9_{n+1}$) being organised between the heat exchangers of the pre-cooling and the heat exchangers of the air heating, in each case in pairs and starting from the outside, using a heat transport means, and the forced movement of the airflow (1) being caused at least by a pressure difference generated immediately behind the sections (2).

**2.** Method for the extraction of water from air according to claim 1, **characterised in that** particles suspended in the air are removed in the airflow (1) before the first heat exchange section.

**3.** Method for the extraction of water from air according to claim 1, **characterised in that** the air is ozonised in the airflow (1) before the first heat exchange section.

**4.** Method for the extraction of water from air according to claim 1, **characterised in that** the simultaneous ozonisation of the air and the removal of particles suspended therein are carried out in the airflow before the first heat exchange section.

**5.** Method for the extraction of water from air according to any of the claims 1 to 4, **characterised in that** the heat transfer is carried out in each pair of heat exchange sections ($3_1$ - $3_{2n}$) using changes in the state of the heat transferring substance.

6. Method for the extraction of water from air according to any of the claims 1 to 4, **characterised in that** the heat transfer is carried out in each pair of heat exchange sections ($3_1$ - $3_{2n}$) by means of a substance with high heat conductivity.

7. Method for the extraction of water from air according to any of the claims 1 to 4, **characterised in that** the heat transfer is carried out in each pair of heat exchange sections ($3_1$ - $3_{2n}$) by means of a liquid intermediate heat transfer medium.

8. Method for the extraction of water from air according to claim 7, **characterised in that** water is used as liquid intermediate heat transfer medium.

9. Method for the extraction of water from air according to claim 8, **characterised in that** a substance lowering the water freezing temperature is added to the water.

10. Method for the extraction of water from air according to claim 9, **characterised in that** alcohol is used as the substance lowering the water freezing temperature.

11. Method for the extraction of water from air according to claim 9, **characterised in that** sodium chloride is used as the substance lowering the water freezing temperature.

12. Device for the extraction of water from air where an airflow (1) flows in a channel (5) by forced movement through at least one fan (6) arranged in the channel (5) past heat exchangers arranged in sections and past heat dissipation elements (7) in such a manner

   - that in first sections heat exchangers ($9_1$ - $9_n$) are arranged for the pre-cooling of the air maximally up to the temperature of the dew point ($T_{dpt}$),
   - that in following second sections heat dissipation elements (7) are provided which are exposed to forced cooling from outside the channel (5) and which cool the air down to a temperature level ≤ dew point, the condensed water being collected in a condensate drip pot (8) and dissipated to the outside, and
   - that in third sections heat exchangers ($9_{n+1}$ - $9_{2n}$) are once again arranged which provide for a heating of the air, that the heat exchangers of the first and third sections are connected with each other in pairs and beginning from the outside by means of pipes (17) in order to form a heat transport cycle ($9_1$ - $9_{2n}$, $9_2$ - $9_{2n-1}$, etc. up to $9_n$ - $9_{n+1}$) and a fan (6) is arranged in the direction of the flow downstream of the last heat dissipation element (7) of the second sections and upstream of the first heat exchanger ($9_{n+1}$) of the third sections.

13. Device for the extraction of water from air according to claim 12, **characterised in that** it contains in addition the air filter (10) which is attached on the inlet of the channel (5) for air transport.

14. Device for the extraction of water from air according to claim 13, **characterised in that** the air filter is designed as an air intake fitting (11) which is vertically arranged and widening downwards.

15. Device for the extraction of water from air according to claim 13, **characterised in that** the air filter is an electric filter (20) for suspended particles.

16. Device for the extraction of water from air according to any of the claims 12 to 15, **characterised in that** it contains an air ozoniser (12) which is attached on the inlet of the channel (5) for air transport.

17. Device for the extraction of water from air according to claim 15, **characterised in that** the electric filter (20) is adapted for ozone extraction.

18. Device for the extraction of water from air according to claim 14, **characterised in that** the electric filter (20) which is adapted for ozone extraction is mounted behind the air filter which is designed as an air intake fitting (11) which is vertically arranged and widening downwards.

19. Device for the extraction of water from air according to any of the claims 12 to 18, **characterised in that** an evaporator of the compression-type refrigerating machine is used as heat dissipation element (7).

20. Device for the extraction of water from air according to claim 19, **characterised in that** the condenser (14) of the compression-type refrigerating machine is arranged on the exit of the channel (5) for air transport.

21. Device for the extraction of water from air according to any of the claims 12 to 18, **characterised in that** the cold solder joint block (24) of the refrigerating machine which builds on the Peltier effect is used as heat dissipation element (7).

22. Device for the extraction of water from air according to claim 21, **characterised in that** the hot solder joint block (25) of the refrigerating machine which builds on the Peltier effect is arranged on the exit of the channel (5) for air transport.

23. Device for the extraction of water from air according to any of the claims 12 to 22, **characterised in that** at least another fan (28) is arranged in the channel (5) for air transport behind the "2n" heat exchanger (9$_{2n}$).

24. Device for the extraction of water from air according to any of the claims 21 to 23, **characterised in that** the air intake holes (29) on the walls of channel (5) for air transport are provided behind the "2n" heat exchanger (9$_{2n}$).

25. Device for the extraction of water from air according to any of the claims 12 to 24, **characterised in that** a pump (16) is arranged in the pipes (17) of each heat cycle (9$_1$ - 9$_{2n}$, 9$_2$ - 9$_{2n-1}$, etc. up to 9$_n$ - 9$_{n+1}$).

26. Device for the extraction of water from air according to claim 25, **characterised in that** the pumps (16) of all the heat cycles are arranged together in one sub-assembly.

27. Device for the extraction of water from air according to any of the claims 12 to 24, **characterised in that** the heat exchangers (9$_1$ - 9$_{2n}$, 9$_2$ - 9$_{2n-1}$, etc. up to 9$_n$ - 9$_{n+1}$) of sections 1 and 3 which form a heat cycle are connected with each other by pipes in the form of heat pipes (3).

28. Device for the extraction of water from air according to any of the claims 12 to 24, **characterised in that** the pipes forming the heat cycle between the heat exchangers (9$_1$ - 9$_{2n}$, 9$_2$ - 9$_{2n-1}$, etc. up to 9$_n$ - 9$_{n+1}$) of sections 1 and 3 are provided as heat dissipation elements (32) made of metal.

29. Device for the extraction of water from air according to any of the claims 12 to 28, **characterised in that** the water condensate drip pot (8) communicates with a portion of the channel (5) for air transport which comprises the first "n" heat exchangers (9$_n$) and all the heat dissipation elements (7).

**Revendications**

1. Procédé pour la déshumidification de l'air, selon lequel un flux d'air (1) est contraint de passer par un canal (5), une section après l'autre,

   - en commençant par les sections (3$_1$ - 3$_n$) pour le prérefroidissement de l'air au maximum jusqu'à la température du point de rosée (T$_{dp1}$) au moyen d'échangeurs de chaleur (9$_1$ - 9$_n$),
   - les sections suivantes (2) pour le refroidissement par étapes de l'air dans les zones ≤ au point de rosée pour la condensation des vapeurs d'eau par la dissipation de chaleur au moyen d'éléments de dissipation de chaleur (7) vers l'extérieur du canal (5) et
   - les sections se raccordant (3$_{n+1}$ - 3$_{2n}$) avec réchauffement de l'air par échangeur de chaleur (9$_{n+1}$ - 9$_{2n}$),

   un circuit de transport de chaleur (9$_1$ - 9$_{2n}$, 9$_2$ - 9$_{2n-1}$, etc. jusqu'à 9$_n$ - 9$_{n+1}$) étant organisé à chaque fois entre les échangeurs de chaleur du prérefroidissement et les échangeurs de chaleur du réchauffement d'air,
   en utilisant un moyen de transport de la chaleur, à chaque fois par paire et commençant à l'extérieur, et le mouvement contraint du flux d'air (1) étant produit au minimum par une différence de pression se trouvant immédiatement derrière les sections (2).

2. Procédé pour la déshumidification de l'air selon la revendication 1, **caractérisé en ce que** dans le flux d'air (1), l'air est débarrassé des particules en suspension avant la première section d'échange de chaleur,

3. Procédé de déshumidification de l'air selon la revendication 1, **caractérisé en ce que** dans le flux d'air (1), l'air est ozonisé avant la première section d'échange de chaleur.

4. Procédé de déshumidification de l'air selon la revendication 1, l'ozonisation de l'air et le nettoyage de l'air des particules en suspension sont exécutés simultanément avant la première section d'échange de chaleur.

5. Procédé de déshumidification de l'air selon l'une des revendications 1 à 4, **caractérisé en ce que** le transfert de chaleur est exécuté dans chaque paire de sections d'échange de chaleur (3$_1$ - 3$_{2n}$) en utilisant des changements d'état du matériau transférant la chaleur.

6. Procédé de déshumidification de l'air selon l'une des revendications 1 à 4, **caractérisé en ce que** le transfert de chaleur est exécuté dans chaque paire de sections d'échange de chaleur (3$_1$ - 3$_{2n}$) au moyen d'une matière possédant une conduction de la chaleur élevée.

7. Procédé de déshumidification de l'air selon l'une des revendications 1 à 4, **caractérisé en ce que** l'échange de chaleur est exécuté dans chaque paire de sections d'échange de chaleur (3$_1$ - 3$_{2n}$) au moyen d'un fluide caloporteur intermédiaire.

8. Procédé de déshumidification de l'air selon la revendication 7, **caractérisé en ce que** de l'eau est utilisée comme agent caloporteur intermédiaire fluide.

**9.** Procédé de déshumidification de l'air selon la revendication 8, **caractérisé en ce que** une substance baissant la température de transition de l'eau est ajoutée à l'eau.

**10.** Procédé de déshumidification de l'air selon la revendication 9, **caractérisé en ce que** de l'alcool est utilisé comme substance baissant la température de transition de l'eau.

**11.** Procédé de déshumidification de l'air selon la revendication 9, **caractérisé en ce que** du sel de cuisine est utilisé comme substance baissant la température de transition de l'eau.

**12.** Installation pour la déshumidification de l'air, selon lequel, dans un canal (5), un flux d'air (1) est contraint de passer par au moins un ventilateur (6) placé dans le canal (5), le long d'échangeurs de chaleur et d'éléments de dissipation de chaleur (7) disposés par section, de sorte que

- des échangeurs de chaleur ($9_1$ - $9_n$) pour le prérefroidissement de l'air au maximum jusqu'à la température du point de rosée ($T_{dp1}$) sont disposés dans les premières sections,
- dans les deuxièmes sections suivantes se trouvent des éléments de dissipation de chaleur (7) qui subissent un refroidissement forcé de l'extérieur du canal (5) et refroidissent l'air à un niveau de température ≤ au point de rosée, l'eau condensée étant collectée dans un récipient de collecte de la condensation (8) et évacuée vers l'extérieur et
- dans les troisièmes sections se trouvent de nouveau des échangeurs de chaleur ($9_{n+1}$ - $9_{2n}$) qui produisent un réchauffement de l'air, les échangeurs de chaleur des première et troisième sections étant reliés entre elles par paire et en partant de l'extérieur par des tuyauteries (17) pour la formation à chaque fois d'un circuit de transport de chaleur ($9_1$ - $9_{2n}$, $9_2$ - $9_{2n-1}$, etc. jusqu'à $9_n$ - $9_{n+1}$) et un ventilateur (6) est disposé dans la direction d'écoulement après le dernier élément de dissipation de chaleur (7) des deuxièmes sections et avant le premier échangeur de chaleur ($9_{n+1}$) des troisièmes sections.

**13.** Installation de déshumidification de l'air selon la revendication 12, **caractérisée en ce que** elle contient en plus le filtre à air (10), lequel est placé à l'entrée du canal (5) pour le transport de l'air.

**14.** Installation de déshumidification de l'air selon la revendication 13, **caractérisée en ce que** le filtre à air est construit comme une prise d'air (11) s'évasant vers le bas placée verticalement.

**15.** Installation de déshumidification de l'air selon la revendication 13, **caractérisée en ce que** le filtre à air est un filtre électrique (20) pour particules en suspension.

**16.** Installation de déshumidification de l'air selon l'une des revendications 12 à 15, **caractérisée en ce que** elle contient un ozoniseur d'air (12), lequel est disposé à l'entrée du canal (5) pour le transport de l'air.

**17.** Installation de déshumidification de l'air selon la revendication 15, **caractérisée en ce que** le filtre électrique (20) est adapté à la production d'ozone.

**18.** Installation de déshumidification de l'air selon la revendication 14, **caractérisée en ce que** derrière le filtre à air, lequel est construit comme une prise d'air (11) s'évasant vers le bas placée verticalement, est disposé le filtre électrique (20), lequel est adapté à la production d'ozone.

**19.** Installation de déshumidification de l'air selon l'une des revendications 12 à 18, **caractérisée en ce que** un évaporateur de la machine frigorifique à compression est employé comme élément de dissipation de chaleur (7).

**20.** Installation de déshumidification de l'air selon la revendication 19, **caractérisée en ce que** le condenseur (14) de la machine frigorifique à compression est disposé à la sortie du canal (5) pour le transport de l'air.

**21.** Installation de déshumidification de l'air selon l'une des revendications 12 à 18, **caractérisée en ce que** le bloc soudure froide (24) de la machine frigorifique à effet Peltier est employé comme élément de dissipation de chaleur (7).

**22.** Installation de déshumidification de l'air selon la revendication 21, **caractérisée en ce que** le bloc soudure chaude (25) de la machine frigorifique à effet Peltier est disposé à la sortie du canal (5) pour le transport de l'air.

**23.** Installation de déshumidification de l'air selon l'une des revendications 12 à 22, **caractérisée en ce que** au moins un autre ventilateur (28) est disposé dans le canal (5) pour le transport de l'air après les « 2n » échangeurs de chaleur ($9_{2n}$).

**24.** Installation de déshumidification de l'air selon l'une des revendications 21 à 23, **caractérisée en ce que** les entrées d'air (29) sont placées sur les parois du canal (5) pour le transport de l'air derrière les « 2n » échangeurs de chaleur ($9_{2n}$).

**25.** Installation de déshumidification de l'air selon l'une des revendications 12 à 24, **caractérisée en ce que** une pompe est disposée dans la tuyauterie (17) de chaque circuit de chaleur ($9_1$ - $9_{2n}$, $9_2$ - $9_{2n-1}$, etc. jusqu'à $9_n$ - $9_{n+1}$).

**26.** Installation de déshumidification de l'air selon la revendication 25, **caractérisée en ce que** les pompes (16) de tous les circuits de chaleur sont groupées en un assemblage.

**27.** Installation de déshumidification de l'air selon l'une des revendications 12 à 24, **caractérisée en ce que** les échangeurs de chaleur ($9_1$ - $9_{2n}$, $9_2$ - $9_{2n-1}$, etc. jusqu'à $9_n$ - $9_{n+1}$) des sections 1 et 3, formant un circuit de chaleur, sont reliés entre eux par des tuyauteries sous la forme de caloducs (3).

**28.** Installation de déshumidification de l'air selon l'une des revendications 12 à 24, **caractérisée en ce que** les tuyauteries formant le circuit de chaleur entre les échangeurs de chaleur ($9_1$ - $9_{2n}$, $9_2$ - $9_{2n-1}$, etc. jusqu'à $9_n$ - $9_{n+1}$) des sections 1 et 3 sont construites comme des éléments de conduction thermique (32) en métal.

**29.** Installation de déshumidification de l'air selon l'une des revendications 12 à 28, **caractérisée en ce que** le récipient de collecte de l'eau de condensation (8) communique avec une partie du canal (5) pour le transport de l'air, lequel comprend les premiers « n » échangeurs de chaleur ($9_n$) et les tous les éléments de dissipation de chaleur (7).

Fig. 1

Fig. 2

Fig. 3

Fig. 4

Fig. 5

Fig. 6

Fig. 7